# EUROPEAN PATENT APPLICATION

(11) **EP 4 752 986 A1**
(43) Date of publication of application: **03.06.2026**
(21) Application number: 24845370.6
(22) Date of filing: 08.07.2024
(51) Int. Cl.: H01M 4/66, H01M 50/531

(54) **NON-AQUEOUS ELECTROLYTE SECONDARY BATTERY**

(30) Priority: 24.07.2023 JP 2023119974
(71) Applicant: Panasonic Intellectual Property Management Co., Ltd., Kadoma-shi, Osaka 571-0057 (JP)
(72) Inventor: KIRIBAYASHI, Hoshimitsu, Kadoma-shi, Osaka 571-0057 (JP); TANIGUCHI,Yasushi, Kadoma-shi, Osaka 571-0057 (JP); OZEKI, Ippei, Kadoma-shi, Osaka 571-0057 (JP)
(74) Representative: Eisenführ Speiser
(86) International application number: PCT/JP2024/024628
(87) International publication number: WO 2025/022989

(57) **Abstract**

A disclosed non-aqueous electrolyte secondary battery includes a cathode, an anode (12), a separator placed between the cathode and the anode (12), and a non-aqueous electrolyte. The anode (12) includes an anode current collector (12a), an anode tab (12b), and a first lithium layer (12c1) containing lithium metal and/or a lithium alloy. In a connection portion (C) between the anode current collector (12a) and the anode tab (12b), the anode current collector (12a) and the anode tab (12b) are connected to each other via the first lithium layer (12c1), and the anode current collector (12a) and the anode tab (12b) are not in contact with each other.

## Description

### [Technical Field]

The present disclosure relates to a non-aqueous electrolyte secondary battery.

### [Background Art]

Non-aqueous electrolyte secondary batteries have high power and energy densities, and are therefore used for a wide variety of applications such as consumer and in-vehicle applications. In recent years, further improvement in performance of non-aqueous electrolyte secondary batteries has been demanded. Various proposals have been made for non-aqueous electrolyte secondary batteries.

Claim 1 of PTL 1 (Japanese Patent No. 6,219,273) discloses "an anode for a lithium secondary battery, further comprising: an anode current collector; an anode active material layer placed on a partial region of a surface of the anode current collector; a lithium layer containing metal lithium, which is placed on a non-placement region of the surface of the anode current collector on which the anode active material layer is not placed; and an anode lead resistance-welded to the non-placement region of the anode current collector, wherein the lithium layer is placed in at least a part between the anode lead and the anode current collector."

### [Citation List]

### [Patent Literature]

PTL 1: Japanese Patent No. 6,219,273

### [Summary of Invention]

### [Technical Problem]

Currently, further improvement in performance of non-aqueous electrolyte secondary batteries has been demanded, and study has been conducted on reducing the internal resistance of batteries for such improvement. To reduce the internal resistance of batteries, it is particularly important to reduce the resistance between anode current collectors and anode tabs. An object of the present disclosure is to provide a non-aqueous electrolyte secondary battery with low resistance between an anode current collector and an anode tab.

### [Solution to Problem]

An aspect of the present disclosure relates to a non-aqueous electrolyte secondary battery. The non-aqueous electrolyte secondary battery includes a cathode; an anode; a separator placed between the cathode and the anode; and a non-aqueous electrolyte, wherein the anode includes an anode current collector, an anode tab, and a first lithium layer containing lithium metal and/or a lithium alloy, and in a connection portion between the anode current collector and the anode tab, the anode current collector and the anode tab are connected to each other via the first lithium layer, and the anode current collector and the anode tab are not in contact with each other.

### [Advantageous Effects of Invention]

According to the present disclosure, a non-aqueous electrolyte secondary battery with low resistance between an anode current collector and an anode tab can be provided.

While novel features of the present invention will be described in the appended claims, the present invention, both as to configuration and content, will be better understood, along with other objects and features of the present invention, from the following detailed description taken in conjunction with the drawings.

### [Brief Description of Drawings]

Fig. 1 is a cross-sectional view schematically showing a non-aqueous electrolyte secondary battery of Embodiment 1.
Fig. 2 is a cross-sectional view schematically showing an example of a connection portion between an anode current collector and an anode tab in the non-aqueous electrolyte secondary battery shown in Fig. 1.
Fig. 3 is a top view schematically showing an example of the connection portion between the anode current collector and the anode tab in the non-aqueous electrolyte secondary battery shown in Fig. 1.
Fig. 4 is a cross-sectional view schematically showing another example of the connection portion between the anode current collector and the anode tab in the non-aqueous electrolyte secondary battery shown in Fig. 1.

### [Description of Embodiments]

Embodiments according to the present disclosure will be described below with reference to examples; however, the present disclosure is not limited to the examples described below. Although specific numerical values and materials may be illustrated in the following description, other numerical values and materials may be applied insofar as the effects of the present disclosure are exhibited. In this specification, the expression "numerical value A to numerical value B" includes numerical value A and numerical value B and can also be read as "numerical value A or more and numerical value B or less." In the following description, when lower limits and upper limits are illustrated for numerical values for specific physical properties or conditions or the like, any of the illustrated lower limits can be arbitrarily combined with any of the illustrated upper limits as long as the lower limit is not equal to or higher than the upper limit. In the following description, when examples of a component or a method are listed, only one of the listed examples may be used, or two or more of the listed examples may be used in combination, unless otherwise stated.

### (Non-aqueous electrolyte secondary battery)

The non-aqueous electrolyte secondary battery according to the present embodiment hereinafter may be referred to as "secondary battery (B)." The secondary battery (B) includes a cathode, an anode, a separator placed between the cathode and the anode, and a non-aqueous electrolyte. The anode includes an anode current collector, an anode tab, and a first lithium layer containing lithium metal and/or a lithium alloy. In a connection portion between the anode current collector and the anode tab (hereinafter may be referred to as "connection portion (C)"), the anode current collector and the anode tab are connected to each other via the first lithium layer, and the anode current collector and the anode tab are not in contact with each other.

Lithium layers are less conductive than metals constituting anode tabs. Therefore, the resistance between anode tabs and anode current collectors has been reduced by directly connecting the anode tabs and the anode current collectors to each other. However, the present inventors have newly found from studies that when a lithium layer is formed on an anode current collector, the resistance in a connection portion is increased by removing the lithium layer in the connection portion and directly connecting the anode current collector and an anode tab to each other. The present inventors have newly found from further studies that the above configuration of the secondary battery (B) can significantly reduce the resistance between the anode current collector and the anode tab. The present disclosure is based on this novel finding.

Although the reasons why the above effect is achieved are currently not clear, one reason may be the fact that the lithium layer is relatively soft. Since a relatively soft lithium layer functions as a cushion when connecting an anode current collector and an anode tab to each other, it is believed that layers in a connection portion can each be welded well, and consequently the resistance between the anode current collector and the anode tab can be reduced.

The anode current collector has a first main surface and a second main surface opposite to the first main surface. The first lithium layer is placed on the first main surface. The anode may further include a second lithium layer containing lithium metal and/or a lithium alloy. The second lithium layer is placed on the second main surface of the anode current collector and opposes the first lithium layer across the anode current collector. The resistance around the anode tab can be further reduced by forming the second lithium layer. The second lithium layer is relatively soft, and therefore can function as a cushion when connecting the anode tab and the anode current collector to each other. Therefore, it is believed that the resistance between the anode current collector and the anode tab can be further reduced using the second lithium layer.

The first lithium layer can be formed on the first main surface of the anode current collector. However, the first lithium layer may also be formed on the surface of the anode tab.

The thickness of the first lithium layer may be 0.1 µm or more, 1.0 µm or more, 3.0 µm or more, 5.0 µm or more, or 10 µm or more, and may be 50 µm or less, 30 µm or less, 20 µm or less, 10 µm or less, or 5.0 µm or less. The thickness of the first lithium layer may be 0.1 µm or more and 30 µm or less. The resistance between the anode current collector and the anode tab can be particularly reduced by making the thickness of the first lithium layer 0.1 µm or more. An increase in the resistance by the lithium layers can be suppressed by making the thickness of the first lithium layer 30 µm or less. The thickness of the second lithium layer may be within the range illustrated for the thickness of the first lithium layer. The thickness of the first lithium layer and the thickness of the second lithium layer may be the same or different.

The first lithium layer may be formed on the surface of the anode current collector only in the part to which the anode tab is connected, or only in the part to which the anode tab is connected and a region surrounding the part. Alternatively, the first lithium layer may be formed on one entire surface of the anode current collector. The region surrounding the part to which the anode tab is connected refers to a region within 3 mm (e.g., within 1 mm) from the outer periphery of the anode tab in a planar view. The second lithium layer may be formed in a region opposing the region in which the first lithium layer is formed, across the anode current collector.

### (Anode current collector)

As the anode current collector, it is possible to use a metal foil or the like, and it is possible to use a copper foil, a copper alloy foil, a copper-deposited resin sheet (such as a polyethylene terephthalate sheet), a stainless foil, a copper-deposited stainless foil, or the like. The content of elements other than copper in the copper alloy is usually 30% by mass or less (such as 10% by mass or less). Examples of the elements other than copper include zinc, tin, aluminum, beryllium, nickel, iron, and manganese. The anode current collector further includes a current collector on which a conductive film is formed.

The first lithium layer can be formed on a part or the whole of one main surface (the first main surface) of the anode current collector. The second lithium layer may be formed on a part or the whole of the other main surface (the second main surface) of the anode current collector. The thickness of the anode current collector may be in the range of 6 µm to 20 µm (e.g., in the range of 8 µm to 15 µm).

The lithium layer (the first lithium layer or the second lithium layer) contains at least one selected from the group consisting of lithium metal and a lithium alloy. The lithium layer may be a lithium metal layer or a lithium alloy layer. The lithium alloy layer is constituted of lithium and elements other than lithium. Examples of the other elements (such as other metal elements) include magnesium, aluminum, indium, copper, zinc, potassium, calcium, sodium, silver, and gold. The content of the other elements may be 5% by mass or less (such as 3% by mass or less).

The method for forming the lithium layer is not particularly limited, and a known method may be applied. For example, the lithium layer may be formed by pressure bonding a lithium foil to the anode current collector. Alternatively, the lithium layer may be formed by the deposition method. Alternatively, the lithium layer may be formed using a resin sheet on which the lithium layer is formed. For example, a resin sheet on which the lithium layer is formed and the anode current collector are first stacked and pressed so that the lithium layer and the anode current collector are in contact with each other. Next, the resin sheet is peeled off, resulting in the anode current collector on which the lithium layer is formed. The method using a resin sheet on which the lithium layer is formed, or the deposition method is suitable for forming a thin lithium layer.

### (Anode tab)

The anode tab is not particularly limited, and a known anode tab may be used. One end of the anode tab is connected to the anode current collector via the first lithium layer in the connection portion (C). The other end of the anode tab is electrically connected to an anode terminal (such as a battery case).

The anode tab can be formed of a metal. A metal foil may be used for the anode tab. Alternatively, a clad material including a metal foil and nickel layers formed on the two surfaces of the metal foil may be used for the anode tab. Examples of the metal constituting the metal foil include copper, copper alloys, iron, and iron alloys. A nickel layer may be present on the main surface in contact with the first lithium layer among the two main surfaces of the anode tab. Nickel layers are present on both surfaces of a preferred example of the anode tab.

The size of the anode tab is determined taking the discharge capacity and other factors into consideration. The width of the anode tab may be in the range of 1 mm to 50 mm (e.g., in the range of 1 mm to 5 mm). The thickness of the anode tab may be in the range of 6 µm to 200 µm (e.g., in the range of 50 µm to 150 µm).

The secondary battery (B) includes at least one anode tab. The secondary battery (B) may include multiple anode tabs. In this case, each of the multiple anode tabs is connected to the anode current collector via the first lithium layer and is not in contact with the anode current collector in each of the connection portions (C).

A ratio Lt/Wc of the length Lt of the anode tab in the connection portion (C) to the width Wc of the anode current collector is not particularly limited, and may be in the range of 0.03 to 1.0 (e.g., in the range of 0.04 to 0.5). When the ratio Lt/Wc is 1.0, the anode tab is connected to the entire anode current collector in the width direction of the anode current collector.

The secondary battery (B) may include an insulating tape (protective tape) attached to the anode to cover the anode tab. A short circuit can be suppressed using such an insulating tape. The insulating tape is not particularly limited, and a known insulating tape used for batteries may be used. The insulating tape may be a tape using an insulating resin such as a polyimide, polytetrafluoroethylene (PTFE), or polypropylene (PP) resin.

### (Method for connecting anode current collector and anode tab to each other)

The anode current collector and the anode tab are connected to each other to meet the following conditions (1) and (2):
(1) The anode current collector and the anode tab are connected to each other via the first lithium layer in the connection portion (C).
(2) The anode current collector and the anode tab are not in contact with each other in the connection portion (C).

An example of the connection method will be described below. First, the anode current collector is prepared having at least one surface on which the lithium layer is formed. Next, the anode current collector and the anode tab are stacked so that the lithium layer is placed between them, and the anode current collector, the lithium layer, and the anode tab are connected to each other. Here, the conditions (1) and (2) above are not met if the lithium layer is molten while the anode current collector and the anode tab are brought into direct contact with each other. Therefore, resistance welding is not used for the connection in the connection portion (C). Examples of the method to perform the connection to meet the conditions (1) and (2) include ultrasonic welding and friction stir welding.

Ultrasonic welding is preferably performed under conditions where the lithium layer is not molten, in order to prevent the lithium layer from becoming molten and removed.

An example of components of the secondary battery (B) will be described below. Components other than those in the configuration characteristic of the secondary battery (B) of the present disclosure are not particularly limited, and components used for known non-aqueous electrolyte secondary batteries may be applied.

The secondary battery (B) may be a lithium secondary battery (a lithium metal secondary battery) containing lithium metal (or a lithium alloy) as an anode active material. Alternatively, the secondary battery (B) may be a battery containing, as an anode active material, a material reversibly storing and releasing lithium ions.

### (Anode)

The anode is selected according to the type of the secondary battery (B). In the anode, when the secondary battery (B) is a lithium metal secondary battery, lithium metal precipitates during charging, and the lithium metal is dissolved in the non-aqueous electrolyte during discharging. In this case, the anode includes the above-described anode current collector. As described above, the lithium layer may be formed on the surface of the anode current collector.

The anode may include the anode current collector and an anode mixture layer formed on the anode current collector. The anode mixture layer contains an anode active material and may also contain other additives (such as a binder, a conductive material, and a thickener) as necessary. The anode mixture layer is not particularly limited, and a known anode mixture layer may be used.

A material capable of reversibly storing and releasing lithium ions can be used as the anode active material contained in the anode mixture layer. Examples of such an anode active material include carbonaceous materials and Si-containing materials. The anode active material may contain an Si-containing material, or may be an Si-containing material. Examples of the carbonaceous materials include graphite, graphitizable carbon (soft carbon), and non-graphitizable carbon (hard carbon). Examples of the Si-containing materials include elemental Si, silicon alloys, silicon compounds (such as silicon oxides), and composite materials in which a silicon phase is dispersed in a lithium ion conductive phase (a matrix). The anode may contain only a single anode active material, or may contain two or more anode active materials.

Examples of the binder include fluororesins, polyacrylonitrile, polyimide resins, acrylic resins, polyolefin resins, and rubbery polymers. Examples of the fluororesins include polytetrafluoroethylene and polyvinylidene fluoride.

A conductive carbonaceous material can be used as the conductive material, for example. Examples of the conductive carbonaceous material include carbon black, carbon nanotubes, and graphite. Examples of the carbon black include acetylene black and ketjen black.

A cellulose derivative such as cellulose ether can be used as the thickener, for example. Examples of the cellulose derivative include carboxymethylcellulose (CMC) and modified CMC, and methylcellulose. Examples of the modified CMC include CMC salts. Examples of such salts include alkali metal salts (such as sodium salt) and ammonium salt.

### (Cathode)

The cathode includes a cathode current collector and a cathode mixture layer formed on the cathode current collector, for example. Examples of the material for the cathode current collector include metal materials such as Al, an Al alloy, Ti, a Ti alloy, and an Fe alloy. The Fe alloy may be stainless steel. The cathode may include a cathode tab.

The cathode mixture layer contains a cathode active material and may also contain other additives (such as a binder, a conductive material, and a thickener) as necessary. The cathode mixture layer is not particularly limited, and a known cathode mixture layer may be used. A binder, a conductive material, and a thickener described as materials for the anode mixture layer may be used as the binder, the conductive material, and the thickener, respectively.

A material capable of reversibly storing and releasing lithium ions can be used as the cathode active material. Examples of the cathode active material include a lithium-containing transition metal oxide containing lithium and a transition metal element.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain only a single transition metal element, or may contain two or more transition metal elements. The transition metal elements may be at least one selected from the group consisting of Co, Ni, and Mn. The lithium-containing transition metal oxide can contain one or more typical metal elements as necessary. Examples of the typical metal elements include Mg, Al, Ca, Zn, Ga, Ge, Sn, Sb, Pb, and Bi.

The method for forming the cathode and the anode is not particularly limited, and they may be formed by a known method. In an example of the method for forming the mixture layer (the cathode mixture layer or the anode mixture layer), a slurry containing components of the mixture layer and a dispersion medium is first applied onto the current collector to form a coating. Next, the coating is dried and pressed. Thus, a polar plate (the cathode or the anode) including the mixture layer is obtained.

### (Separator)

A porous sheet having ion permeability and insulating properties is used as the separator. Examples of the form of the porous sheet include microporous films, woven fabrics, and nonwoven fabrics. The material for the separator may be a polymer material. Examples of the polymer material include olefin resins, polyamide resins, and cellulose. Examples of the olefin resins include polyethylene, polypropylene, and a copolymer of ethylene and propylene. The separator may contain an additive as necessary. Examples of the additive include inorganic fillers.

### (Non-aqueous electrolyte)

The non-aqueous electrolyte (non-aqueous electrolyte solution) contains a solvent (non-aqueous solvent) and a solute dissolved in the solvent. Examples of the solute include lithium salts. Various additives may be added to the non-aqueous electrolyte. Known additives may be used as such additives.

The non-aqueous solvent is not particularly limited, and a known non-aqueous solvent may be used. Examples of the non-aqueous solvent include cyclic carbonates, linear carbonates, cyclic carboxylates, and linear carboxylates. Examples of the cyclic carbonates include propylene carbonate (PC), ethylene carbonate (EC), fluoroethylene carbonate (FEC), and vinylene carbonate (VC). The linear carbonates include diethyl carbonate (DEC), ethylmethyl carbonate (EMC), and dimethyl carbonate (DMC). Examples of the cyclic carboxylates include γ-butyrolactone (GBL) and γ-valerolactone (GVL). Examples of the linear carboxylates include non-aqueous solvents such as methyl acetate, ethyl acetate, propyl acetate, methyl propionate (MP), and ethyl propionate (EP). The non-aqueous solvents may be used singly or in a combination of two or more.

Examples of the lithium salts include chlorine-containing acid lithium salts (such as LiClO₄, LiAlCl₄, and LiB₁₀Cl₁₀), fluorine-containing acid lithium salts (such as LiPF₆, LiPF₂O₂, LiBF₄, LiSbF₆, LiAsF₆, LiCF₃SO₃, and LiCF₃CO₂), fluorine-containing acid imide lithium salts (LiN(FSO₂)₂, LiN(CF₃SO₂)₂, LiN(CF₃SO₂)(C₄F₉SO₂), and LiN(C₂F₅SO₂)₂), and lithium halides (such as LiCl, LiBr, and Lil). The lithium salts may be used singly or in a combination of two or more.

The concentration of the lithium salts in the electrolyte solution may be 1 mol/L or more and 2 mol/L or less, or may be 1 mol/L or more and 1.5 mol/L or less.

### (Shape etc.)

The cathode, the anode, and the separator constitute an electrode assembly. The electrode assembly may be a winding electrode assembly. The winding electrode assembly can be formed by winding the cathode, the anode, and the separator so that the separator is placed between the cathode and the anode. The electrode assembly may also be a form other than the winding type. For example, the electrode assembly may be an electrode assembly in which the cathode and the anode are stacked with the separator interposed therebetween (a stacked electrode assembly). The shape of the secondary battery (B) may be a cylindrical shape or a rectangular shape. The secondary battery (B) includes an exterior body conforming such a shape. The exterior body contains the electrode assembly and the non-aqueous electrolyte. The exterior body is not particularly limited, and a known exterior body may be used.

Examples of the secondary battery (B) will be specifically described below with reference to the drawings. However, the secondary battery (B) is not limited to the configuration shown in the drawings. Components other than those in the configuration essential for the secondary battery (B) may be omitted. The examples described below may be modified based on the above description. The explanation below may also be applied to the above embodiments.

### (Embodiment 1)

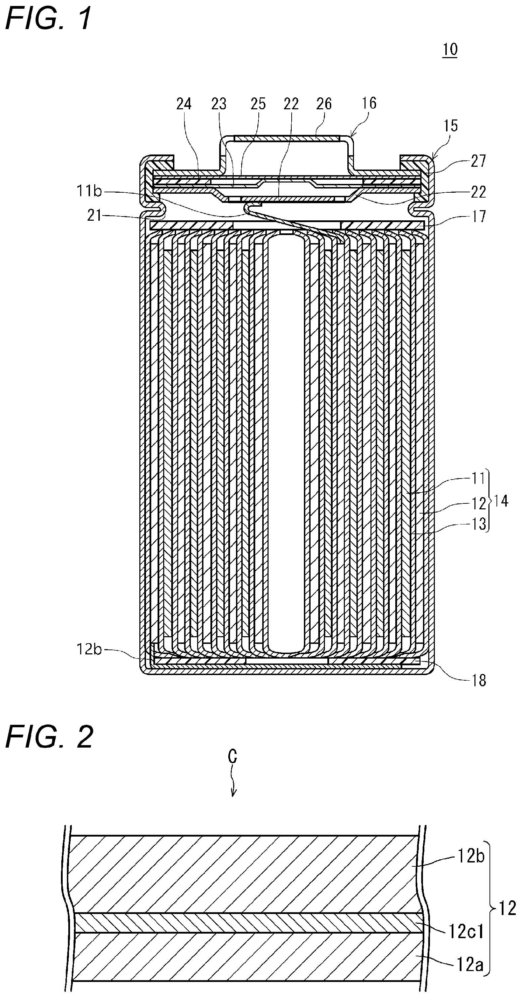

Fig. 1 is a cross-sectional view schematically showing a non-aqueous electrolyte secondary battery 10 according to Embodiment 1. The non-aqueous electrolyte secondary battery 10 is a cylindrical battery. The non-aqueous electrolyte secondary battery 10 includes a cylindrical battery case, and a winding electrode assembly 14 and a non-aqueous electrolyte (not shown) contained in the battery case. The battery case includes a bottomed cylindrical case main body 15 and a sealing body 16 for sealing the opening of the case main body 15. The case main body 15 is made of a metal. A gasket 27 placed between the case main body 15 and the sealing body 16 ensures sealing performance of the battery case. The case main body 15, the sealing body 16, and the gasket 27 constitute an exterior body. Insulating plates 17 and 18 are placed on the two end portions of the electrode assembly 14 in the winding axis direction.

The case main body 15 has a stepped portion 21. The stepped portion 21 supports the sealing body 16 and the gasket 27. The sealing body 16 includes a filter 22, a lower valve body 23, an insulating member 24, an upper valve body 25, and a cap 26. The above members constituting the sealing body 16, except for the insulating member 24, are electrically connected to each other. The cap 26 functions as a cathode terminal. The case main body 15 functions as an anode terminal.

The electrode assembly 14 is a winding electrode assembly constituted by a cathode 11, an anode 12, and a separator 13. The cathode 11, the anode 12, and the separator 13 are all belt-shaped.

One end of a cathode tab 11b is connected to a cathode current collector of the cathode 11. The other end of the cathode tab 11b is connected to the sealing body 16 (the filter 22). That is, the cathode current collector of the cathode 11 is electrically connected to the cap 26 via the cathode tab 11b. One end of an anode tab 12b is connected to an anode current collector of the anode 12. The other end of the anode tab 12b is connected to the case main body 15. That is, the anode current collector of the anode 12 is electrically connected to the case main body 15 via the anode tab 12b.

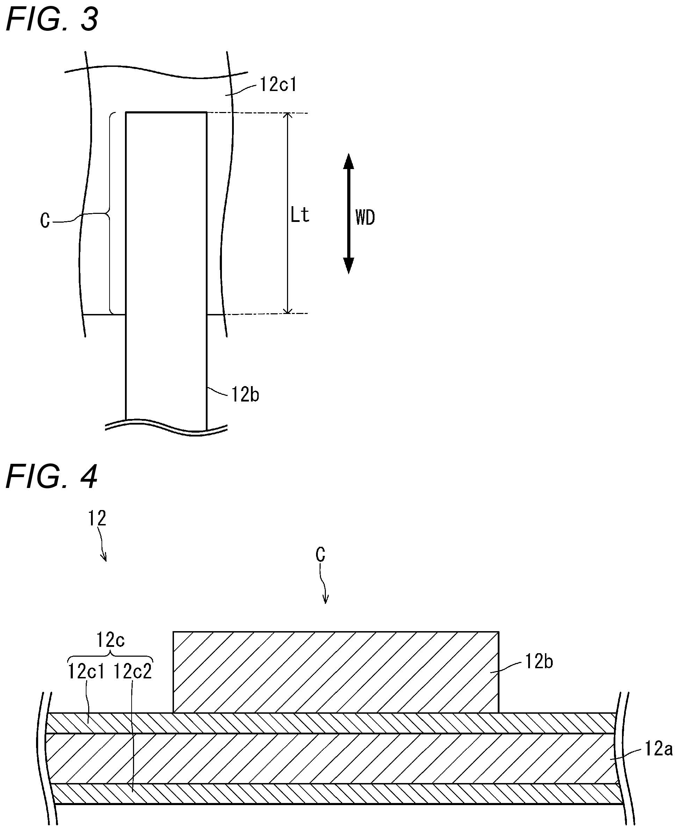

Fig. 2 schematically shows the cross-section of a connection portion C between the anode current collector 12a and the anode tab 12b (a connection portion (C)). Fig. 3 schematically shows a top view of the connection portion C. Fig. 3 shows a width direction WD of the anode current collector 12a and a length Lt of the anode tab 12b in the connection portion C (the length in the width direction WD). The width direction WD of the anode current collector 12a is a direction parallel to the winding axis of the winding electrode assembly 14. The ratio of the length Lt to the width Wc of the anode current collector 12a (the length of the anode current collector 12a in the width direction WD) may be in the above-described range.

The anode 12 of the example shown in Fig. 2 includes the anode current collector 12a, the anode tab 12b, and a first lithium layer 12c1. As shown in Fig. 2, the first lithium layer 12c1 has not been removed and is present between the anode tab 12b and the anode current collector 12a in the connection portion C. The first lithium layer 12c1 is in contact with both the anode tab 12b and the anode current collector 12a in the connection portion C. That is, the anode tab 12b is connected to the anode current collector 12a via the first lithium layer 12c1. Further, the anode current collector 12a and the anode tab 12b are not in contact with each other in the connection portion C.

An example of the method for connecting the anode current collector 12a and the anode tab 12b to each other is ultrasonic welding. For example, ultrasonic welding is performed using an apparatus including an anvil and an ultrasonic horn, so that the first lithium layer 12c1 is formed on one surface of the anode current collector 12a, and the anode current collector 12a and the anode tab 12b are connected to each other via the first lithium layer 12c1. Specifically, the surface of the anode current collector 12a opposite to the surface thereof on which the first lithium layer 12c1 is formed is placed on the anvil, and the anode tab 12b is stacked on the first lithium layer 12c1. Ultrasound is then applied to the anode tab 12b using the ultrasonic horn to weld the anode tab 12b and the first lithium layer 12c1 to each other.

Ultrasonic welding is performed under a condition that there is no direct contact between the anode current collector 12a and the anode tab 12b caused by removal of the first lithium layer 12c1. Specifically, ultrasonic welding is performed under a condition that the first lithium layer 12c1 is not excessively heated.

### (Embodiment 2)

Fig. 4 is a cross-sectional view schematically showing an anode of a non-aqueous electrolyte secondary battery according to Embodiment 2. The anode 12 of the example shown in Fig. 4 includes an anode current collector 12a, an anode tab 12b, a first lithium layer 12c1, and a second lithium layer 12c2. As shown in Fig. 4, lithium layers 12c (the first lithium layer 12c1 and the second lithium layer 12c2) are placed on both surfaces of the anode current collector 12a in a connection portion C. The first lithium layer 12c1 has not been removed and is present between the anode tab 12b and the anode current collector 12a in the connection portion C. The first lithium layer 12c1 is in contact with both the anode tab 12b and the anode current collector 12a in the connection portion C. That is, the anode tab 12b is connected to the anode current collector 12a via the first lithium layer 12c1. Further, the anode current collector 12a and the anode tab 12b are not in contact with each other in the connection portion C.

An example of the method for connecting the anode current collector 12a and the anode tab 12b to each other is ultrasonic welding, as in Embodiment 1. For example, ultrasonic welding is performed using an apparatus including an anvil and an ultrasonic horn, so that the lithium layers 12c (the first lithium layer 12c1 and the second lithium layer 12c2) are formed on both surfaces of the anode current collector 12a, and the anode current collector 12a and the anode tab 12b are connected to each other via the first lithium layer 12c1. Specifically, the second lithium layer 12c2 on the anode current collector 12a, which has the lithium layers 12c formed on both surfaces, is placed on the anvil, and the anode tab 12b is stacked on the first lithium layer 12c1. Ultrasound is then applied to the anode tab 12b using the ultrasonic horn to weld the anode tab 12b and the first lithium layer 12c1 to each other. Here, it is preferable to perform treatment to prevent cohesion of the second lithium layer 12c2 to the anvil. For example, treatment to form a film on the anvil may be performed. Films such as diamond-like carbon (DLC), SiC, and ceramics (e.g., Al₂O₃) may be used as such a film. A tape may also be placed on the anvil. Tapes made of polyethylene (PE) or polypropylene (PP) may be used as such a tape.

### (Supplement)

The following techniques are disclosed based on the above description.

### (Technology 1)

A non-aqueous electrolyte secondary battery including:
a cathode; an anode; a separator placed between the cathode and the anode; and a non-aqueous electrolyte,
wherein the anode includes an anode current collector, an anode tab, and a first lithium layer containing lithium metal and/or a lithium alloy, and
in a connection portion between the anode current collector and the anode tab, the anode current collector and the anode tab are connected to each other via the first lithium layer, and the anode current collector and the anode tab are not in contact with each other.

### (Technology 2)

The non-aqueous electrolyte secondary battery according to Technology 1,
wherein the anode current collector has a first main surface and a second main surface opposite to the first main surface,
the first lithium layer is placed on the first main surface,
the anode further includes a second lithium layer containing lithium metal and/or a lithium alloy, and
the second lithium layer is placed on the second main surface and opposes the first lithium layer across the anode current collector.

### (Technology 3)

The non-aqueous electrolyte secondary battery according to Technology 1 or 2, wherein the first lithium layer has a thickness of 0.1 µm or more and 30 µm or less.

### [Examples]

The present disclosure will be specifically described below by way of examples, but the present disclosure is not limited by the following examples. In the present examples, an anode current collector and an anode tab were connected to each other under various connection conditions. The cross-section was observed and the resistance was measured for the connection portion between the anode current collector and the anode tab.

### (Example 1)

In Example 1, a copper foil (thickness: 12 µm) was first prepared with a first lithium layer (thickness: 10 µm) formed on one surface. The first lithium layer was formed by pressure bonding and laminating a lithium foil to the copper foil. An anode tab (thickness: 100 µm, width: 3 mm) was further prepared. A clad material with nickel layers formed on both surfaces of a copper foil was used for the anode tab.

The copper film on which the first lithium layer was formed and the anode tab were then ultrasonically welded to each other by the ultrasonic welding method described above. The anode current collector and the anode tab were thus connected to each other via the first lithium layer.

### (Examples 2 to 5)

In Examples 2 to 5, an anode current collector and an anode tab were connected to each other by the same method and under the same conditions as in Example 1, except that the presence or absence and the thickness of a lithium layer were selected as shown in Table 1. A first lithium layer of Example 2 was formed by depositing lithium metal onto a copper foil.

### (Comparative Example 1)

In Comparative Example 1, an anode current collector and an anode tab were connected to each other by the same method and under the same conditions as in Example 1, except that a lithium layer was not formed on the anode current collector.

### (Comparative Example 2)

In Comparative Example 2, an anode current collector and an anode tab were connected to each other by the same method and under the same conditions as in Example 1, except that resistance welding was used instead of ultrasonic welding.

The cross-sections of the connection portions, prepared as above, between the anode current collectors and the anode tabs were observed with a scanning electron microscope (SEM) to evaluate whether the anode current collectors and the anode tabs were in direct contact with each other. The resistance in the connection portions was also measured.

Some of the preparation conditions and the evaluation results for the connection portions are shown in Table 1. The "lithium layer" in Table 1 indicates a lithium layer formed on the anode current collector. In Example 4, a first lithium layer (thickness: 10 µm) was formed on one surface of the anode current collector, and a second lithium layer (thickness: 10 µm) was formed on the other surface thereof. The "contact state" in Table 1 indicates a contact state between the anode current collector and the anode tab, and "contact" indicates that they are in direct contact with each other.

**[Table 1]**

| | Lithium layer | | Welding method | Evaluation results | |
|---|---|---|---|---|---|
| | Formed lithium layer | Thicknes s (µm) | | Contact state | Resistanc e (Ω) |
| Example 1 | First lithium layer | 10 | Ultrasonic welding | No contact | 0.59 |
| Example 2 | First lithium layer | 0.1 | Ultrasonic welding | No contact | 0.61 |
| Example 3 | First lithium layer | 30 | Ultrasonic welding | No contact | 0.65 |
| Example 4 | First lithium layer Second lithium layer | 10 10 | Ultrasonic welding | No contact | 0.53 |
| Example 5 | First lithium layer | 50 | Ultrasonic welding | No contact | 0.78 |
| Comparativ e Example 1 | None | - | Ultrasonic welding | Contact | 0.93 |
| Comparativ e Example 2 | First lithium layer | 10 | Resistanc e welding | Contact | 0.95 |

Examples 1 to 5 represent connection portions used in the secondary battery (B) according to the present disclosure. Comparative Examples 1 and 2 represent connection portions of comparative examples. As shown in Table 1, in the connection portions of Examples 1 to 5, the anode collector and the anode tab were not in contact with each other, and were connected to each other via the first lithium layer. In the connection portion of Comparative Example 2, a part of the lithium layer was removed and the anode current collector and the anode tab were in contact with each other.

The resistance in the connection portions of Examples 1 to 5 was significantly lower than the resistance in the connection portions of Comparative Examples 1 and 2. The resistance in the connection portion of Example 4 using the second lithium layer was lower than the resistance in the connection portion of Example 1 using only the first lithium layer. As described above, the configuration of the secondary battery (B) can reduce the internal resistance of the battery.

In the case of Comparative Example 1 with no lithium layer, there was a part in which a void was formed between the anode current collector (copper foil) and the nickel layer of the anode tab. On the other hand, in the connection portion of Example 4, such a void was not observed, and the lithium layer of the anode current collector and the nickel layer of the anode tab adhered to each other well.

### [Industrial Applicability]

The present disclosure can be used for non-aqueous electrolyte secondary batteries.

While presently preferred embodiments of the present invention have been described, such a disclosure should not be construed restrictively. Various variations and modifications will certainly be apparent to those skilled in the art to which the present invention pertains by reading the above disclosure. Accordingly, the appended claims should be construed as covering all variations and modifications without departing from the true spirit and scope of the present invention.

### [Reference Signs List]

10: Non-aqueous electrolyte secondary battery, 11: Cathode, 12: Anode, 12a: Anode current collector, 12b: Anode tab, 12c: Lithium layers, 12c1: First lithium layer, 12c2: Second lithium layer, 13: Separator, C: Connection portion

## Claims

1. A non-aqueous electrolyte secondary battery comprising:
a cathode; an anode; a separator placed between the cathode and the anode; and a non-aqueous electrolyte,
wherein the anode includes an anode current collector, an anode tab, and a first lithium layer containing lithium metal and/or a lithium alloy, and
in a connection portion between the anode current collector and the anode tab, the anode current collector and the anode tab are connected to each other via the first lithium layer, and the anode current collector and the anode tab are not in contact with each other.

2. The non-aqueous electrolyte secondary battery according to claim 1,
wherein the anode current collector has a first main surface and a second main surface opposite to the first main surface,
the first lithium layer is placed on the first main surface,
the anode further includes a second lithium layer containing lithium metal and/or a lithium alloy, and
the second lithium layer is placed on the second main surface and opposes the first lithium layer across the anode current collector.

3. The non-aqueous electrolyte secondary battery according to claim 1 or 2, wherein the first lithium layer has a thickness of 0.1 µm or more and 30 µm or less.
